# EUROPEAN PATENT SPECIFICATION

(11) **EP 1 449 647 B1**
(45) Date of publication and mention of the grant of the patent: **28.07.2010**
(21) Application number: 02802373.7
(22) Date of filing: 28.10.2002
(51) Int. Cl.: B32B 27/40, B60R 21/04, B60R 13/02, B32B 5/18

(54) **SHOCK ABSORBING MATERIAL**
STOSSABSORBIERENDES MATERIAL
MATERIAU AMORTISSEUR

(30) Priority: 29.10.2001 JP 2001331038
(43) Date of publication of application: 25.08.2004
(73) Proprietor: Bridgestone Corporation, Tokyo 104-8340 (JP)
(72) Inventor: HORIMATSU, Toshiyuki, c/o Bridgestone Corporation, Yokohama-shi, Kanagawa 244-0812 (JP)
(74) Representative: Whalley, Kevin
(86) International application number: PCT/JP2002/011129
(87) International publication number: WO 2003/037625

(56) References cited:
- EP-A- 0 495 715
- EP-A- 0 974 494
- EP-A- 1 106 443
- EP-A1- 0 401 838
- WO-A1-00/44561
- WO-A1-94/17995
- GB-A- 2 322 342
- JP-A- 11 216 791
- JP-A- 49 008 926
- JP-A- 61 089 146
- JP-A- 2000 142 287
- JP-U- 3 013 251
- JP-U- 48 024 111
- JP-U- 61 052 540
- US-A- 5 928 772

## Description

The present invention relates to an impact absorbing member.

To protect a head or other part of an occupant by absorbing impact produced when the head or other part of the occupant collides with interior trim such as a ceiling of a vehicle cabin in the event of vehicle collision, an impact absorbing member is provided.

Examples of conventional impact absorbing member include a rigid polyurethane foam, a polyolefin foam, a resin formed body having a rib on one surface thereof, and a pressed product made of steel or the like. An impact absorbing member made of rigid polyurethane foam has the following advantages: excellent impact absorbing characteristics; low temperature dependence of the impact energy absorbing characteristics; impact absorbing characteristics which is relatively stable against a variety of plunging angle of a free motion head dummy (FMH); easy adjustment of the impact absorbing characteristics; and good economical efficiency because of relatively low cost.

Attention is drawn to prior art references EP-A-0974494, EP-A-0495715, EP-A-1106443, GB-A-2322342, US-A-5928772, JP3013251U, JP11216791A, JP61089146A, JP48024111U, JP61052540U, JP49008926A and WO9417995A.

The ideal impact absorbing characteristics as impact absorbing member is as follows: its load reaches a certain value (certain acceleration) at an initial stage of the compression and, after that, keeps the certain value (certain acceleration), that is, has an F-S waveform (load-stroke waveform) in which the load (F) rises promptly relative to the stroke (S) and, after that, the load (F) keeps substantially constant with transition of the stroke (S).

The impact absorbing member made of rigid polyurethane foam exhibits the F-S waveform nearly equal to the ideal F-S waveform when impact is applied evenly to the whole surface thereof, such as when compressed between two flat plates.

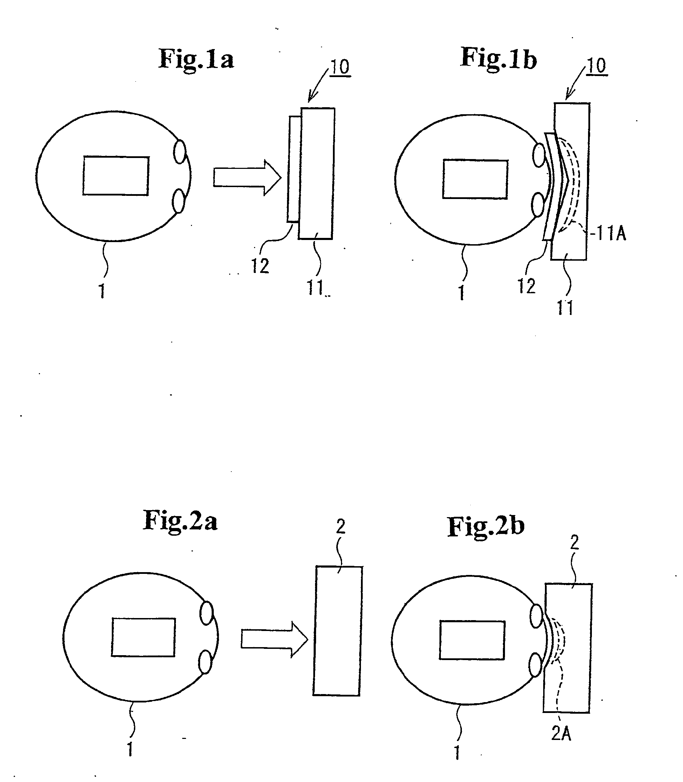

The rigid polyurethane foam is a buckling (brittle) member. Therefore, as shown in Figs. 2a, 2b, when a spherical body such as a free motion head dummy (FMH) 1 collides with and compress an impact absorbing member 2 made of rigid polyurethane foam, stress is locally concentrated on the impact absorbing member 2 and the FMH 1 dents into the impact absorbing member. In this case, the impact energy thereby absorbed is small. That is, as shown in Fig. 2b, when the conventional head protecting member 2 of rigid polyurethane foam is pressed by the FMH 1 at a small area as shown by broken lines 2A, only a portion including the area shown by the broken lines 2A and just around the area contributes to the impact energy absorption.

Increasing the degree of hardness of the entire rigid polyurethane foam increases the load in the initial stage of collision and also excessively increases the load in the later stage of compression.

### SUMMARY OF THE INVENTION

The present invention provides a vehicle having a vehicle cabin comprising a ceiling, wherein an impact absorbing head protecting member is provided on said ceiling, said head protecting member comprising a body made of a rigid polyurethane foam; and a surface member which has a rigidity higher than that of the body and is disposed on one surface of the body, wherein the rigid polyurethane foam has a compressive stress at 50% relative deformation of 0.25-2 MPa, and the surface member has a flexural modulus of 2-1500 MPa.

### BRIEF DESCRIPTION OF THE DRAWINGS

Figs. 1a and 1b are schematic plan views showing an impact absorbing member according to an embodiment of the present invention in a state that an FMH collides the impact absorbing member;
Figs. 2a and 2B are schematic plan views showing an impact absorbing member according to a conventional example in a state that an FMH collides the impact absorbing member; and
Fig. 3 is a graph showing F-S waveforms of impact absorbing members of Example 1 and Comparative Example 1.

### DESCRIPTION OF THE PREFERRED EMBODIMENTS

Fig. 1a shows an impact absorbing member 10 according to an embodiment of the present invention. The impact absorbing member 10 comprises a body 11 made of a rigid polyurethane foam and a surface member 12 which has a rigidity higher than that of the body 11 and is disposed on one surface of the body 11. The load generated in the initial stage of collision with an FMH 1 is dispersed on a wider area by the surface member 12. Therefore, as shown in Fig. 1b, the compressive load in the initial stage acts on a wider area of the body 11.

That is, since the surface member 12 has higher rigidity, the body 11 is squashed to deform not only a collided portion where the FMH 1 collides but also a wider area (shown by broken lines 11A) around the collided portion. Accordingly, even with a short stroke, large impact energy can be absorbed. By properly selecting the rigidity and the area of the surface member, a desired load-stroke curve is imparted to the impact absorbing member.

The body 11 is preferably in a shape of a plate including a flat plate and a curved plate. The rigid polyurethane foam forming the body 11 preferably has a compressive stress at 50% relative deformation of about 0.25 MPa or more, particularly from about 0.25 MPa to 2 MPa, more particularly from about 0.25 MPa to 1.6 MPa. The rigid polyurethane foam preferably has a density of from 40 kg/m³ to 200 kg/m³, particularly from 40 kg/m³ to 140 kg/m³.

The surface member 12 has a rigidity higher than that of the rigid polyurethane foam of the body 11 and preferably has a flexural modulus from 2 MPa to 1500 MPa. The surface member 12 is preferably made of synthetic resin, metal, alloy, glass, ceramics, and the like. Examples of the synthetic resin include polypropylene, polyethylene and polyethylene terephthalate. Examples of the metal include iron, aluminum, and copper. Examples of the alloy include iron-based alloy, aluminum-based alloy, and copper-based alloy. The surface member may be made of paper material, such as corrugated cardboard, or wood. In this case, however, a large thickness is required.

When the impact absorbing member is a head protecting member, the body preferably has a thickness of 10-80 mm, particularly 10-40 mm, more particularly 20-30 mm. When the thickness of the body is less than 10 mm, enough stroke is not obtained so as not to exhibit enough impact energy absorbing efficiency. On the other hand, when the thickness of the body exceeds 80 mm, the impact absorbing member is bulky. Even the impact absorbing member comprising a body having a small thickness in a range from 10 mm to 25 mm can exhibit excellent impact energy absorbing efficiency.

The surface member is in a shape of a plate preferably having a thickness of about 0.5-5 mm. When the impact absorbing member comprises the surface member having a thickness of less than 0.5 mm, the impact absorbing property is insufficient even if the surface member is made of a high-rigid material such as ceramics. When the surface member has a thickness exceeding 5mm, the rigidity of the impact absorbing member should be too large.

The surface member 12 and the body 11 may be united together. The surface member 12 may be united with the body 11 with adhesive or pressure-sensitive adhesive. The surface material 12 may be disposed in a mold for forming the body and the body may be formed and integrated with the surface member by insert molding. The surface member may not be connected with the body.

The surface member preferably covers substantially the whole area of the impact receiving surface of the body. Substantially the whole area of the surface of the body 11 may be covered by one piece of the surface member or a plurality of small surface members. Each of the small surface members may be in circular form of 25 mm or more in diameter or a square form of 25 mm or more on a side. The minimum size is preferably 25 mm " or more.

The body and the surface member are suitably combined by selecting the properties of the rigid polyurethane foam forming the body and the size (thickness) of the body, and the material, the properties, and the size (thickness) of the surface member according to the purpose, thereby providing an impact absorbing member having desired excellent impact energy absorbing efficiency.

The impact absorbing member of the present invention can be used suitably as, but not limited to, a head protecting member which is installed to vehicle body or an interior trim such as a head liner and a garnish.

### EXAMPLE AND COMPARATIVE EXAMPLE

Hereinafter, the present invention will be described in detail with reference to Example and Comparative Example. The following examples are only for illustrative purpose so that the present invention is not limited by the example.

### Example 1

A body made of a rigid polyurethane foam having the following properties and size and a surface member made of polypropylene having the following properties and size were prepared and were united together by bonding the surface member to the body with pressure-sensitive adhesive, thereby producing an impact absorbing member of the present invention.
Body: a rigid polyurethane foam having a compressive stress at 50% relative deformation of 8 kgf/cm² and a density of 100 kg/m³
   150 mm × 80 mm × 30 mm in thickness
Surface member: a PP plate having a flexural modulus of 45 MPa
   100 mm × 100 mm × 1 mm in thickness

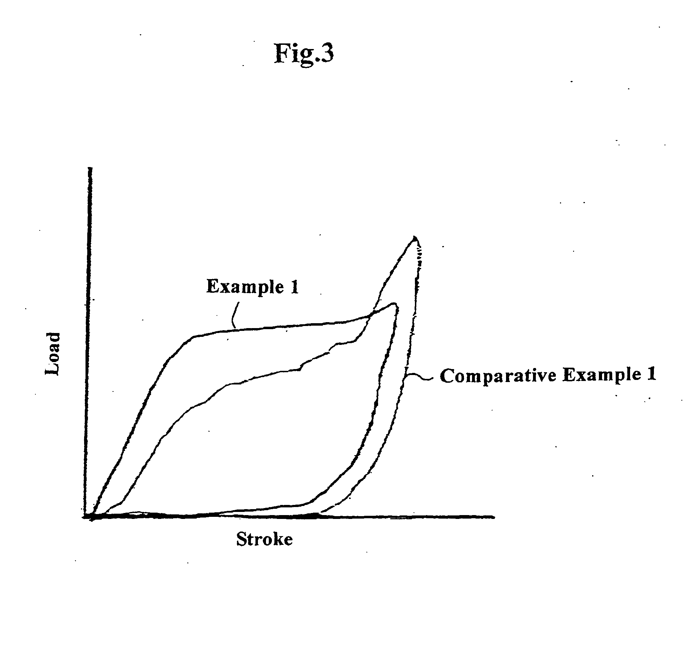

As for the impact absorbing member, an F-S waveform when an FMH collides with the center of the surface member at a speed of 6.7 m/sec was measured. The result of measurement is shown in Fig. 3.

The impact received by the dummy was measured as acceleration in a dynamic evaluation test using an FMH, and the value of head injury criteria (d) (HIC (d)) was calculated from the acceleration. As a result, the HIC value was 770. In general, an HIC (d) value of 1,000 or less is evaluated to be excellent in terms of impact energy absorbing efficiency. Automobile manufacturers develop products to have a value of 800 or less to increase certainty.

### Comparative Example 1

An impact absorbing member was composed of the same rigid polyurethane foam as for the body of Example 1 without the surface member of Example 1. The size of the impact absorbing member was 150 mm × 80 mm × 30 mm in thickness. Also as for this impact absorbing member, an F-S waveform was measured and the result is shown in Fig. 3. The value of the head injury criteria was 860.

It is clear from the above that the impact absorbing member of the present invention can exhibit significantly excellent impact energy absorbing efficiency.

As described in the above, the present invention can provide an impact absorbing member which has significantly excellent impact energy absorbing efficiency and is suitable as a head protecting member capable of absorbing impact energy applied to a head of an occupant in a vehicle cabin during a vehicle collision or the like and capable of reducing the value of head injury criteria.

## Claims

1. A vehicle having a vehicle cabin comprising a ceiling, wherein an impact absorbing head protecting member (10) is provided on said ceiling, said head protecting member (10) comprising a body (11) made of a rigid polyurethane foam; and a surface member (12) which has a rigidity higher than that of the body and is disposed on one surface of the body, wherein the rigid polyurethane foam has a compressive stress at 50% relative deformation of 0.25-2 MPa, and the surface member (12) has a flexural modulus of 2-1500 MPa.

2. A vehicle as claimed in claim 1, wherein the body (11) and the surface member (12) are united together.

3. A vehicle as claimed in any one of claims 1 and 2, wherein the rigid polyurethane foam has a density of 40-200 kg/m³.

4. A vehicle as claimed in any one of claims 1 to 3, wherein the surface member (12) is a plate member disposed to cover substantially the whole area of the impact receiving surface of the body (11).

5. A vehicle as claimed in any one of claims 1 to 4, wherein the thickness of the surface member (12) is 0.5-5 mm.

6. A vehicle as claimed in any one of claims 1 to 5, wherein the thickness of the body (11) is 10-80 mm.

7. A vehicle as claimed in any one of claims 1 to 6, wherein the impact absorbing member (10) is used as a head protecting member for a vehicle and is installed to a vehicle body or an interior trim such as a head liner and a garnish.

8. A vehicle as claimed in any one of claims 1 to 7, wherein substantially the whole area of the surface of the body (11) is covered by one piece of the surface member (12).

9. A vehicle as claimed in any one of claims 1 to 7, wherein substantially the whole area of the surface of the body (11) is covered by a plurality of small surface members (12).

## Patentansprüche

1. Fahrzeug, das eine Fahrzeugkabine hat, die eine Decke umfasst, wobei ein stoßabsorbierendes Kopfschutzelement (10) an der Decke bereitgestellt wird, wobei das Kopfschutzelement (10) einen Körper (11), der aus einem steifen Polyurethanschaumstoff hergestellt ist, und ein Oberflächenelement (12), das eine Steifigkeit, höher als diejenige des Körpers, hat und auf einer Oberfläche des Körpers angeordnet ist, umfasst, wobei der steife Polyurethanschaumstoff eine Druckbeanspruchung bei 50 % relativer Verformung von 0,25-2 MPa hat und das Oberflächenelement (12) einen Biegemodul von 2-1500 MPa hat.

2. Fahrzeug nach Anspruch 1, wobei der Körper (11) und das Oberflächenelement (12) miteinander vereint sind.

3. Fahrzeug nach einem der Ansprüche 1 und 2, wobei der steife Polyurethanschaumstoff eine Dichte von 40-200 kg/m³ hat.

4. Fahrzeug nach einem der Ansprüche 1 bis 3, wobei das Oberflächenelement (12) ein Plattenelement ist, das dafür angeordnet ist, im Wesentlichen die gesamte Fläche der stoßaufnehmenden Oberfläche des Körpers (11) abzudecken.

5. Fahrzeug nach einem der Ansprüche 1 bis 4, wobei die Dicke des Oberflächenelements (12) 0,5-5 mm beträgt.

6. Fahrzeug nach einem der Ansprüche 1 bis 5, wobei die Dicke des Körpers (11) 10-80 mm beträgt.

7. Fahrzeug nach einem der Ansprüche 1 bis 6, wobei das stoßabsorbierende Element (10) als ein Kopfschutzelement für ein Fahrzeug verwendet wird und in eine Fahrzeugkarosserie oder eine Innenausstattung, wie beispielsweise eine Himmelauskleidung und eine Verzierung, eingebaut ist.

8. Fahrzeug nach einem der Ansprüche 1 bis 7, wobei im Wesentlichen die gesamte Fläche der Oberfläche des Körpers (11) durch ein Stück des Oberflächenelements (12) abgedeckt wird.

9. Fahrzeug nach einem der Ansprüche 1 bis 7, wobei im Wesentlichen die gesamte Fläche der Oberfläche des Körpers (11) durch mehrere kleine Oberflächenelemente (12) abgedeckt wird.

## Revendications

1. Véhicule, comportant un habitacle de véhicule comprenant un plafond, un élément de protection de la tête à absorption de l'impact (10) étant agencé sur ledit plafond, ledit élément de protection de la tête (10) comprenant un corps (11) composé d'une mousse de polyuréthane rigide ; et un élément de surface (12) ayant une rigidité supérieure à celle du corps et agencé sur une surface du corps, la mousse de polyuréthane rigide présentant une contrainte de compression en présence d'une déformation relative de 50% comprise entre 0,25 et 2 MPa, l'élément de surface (12) présentant un module d'élasticité en flexion compris entre 2 et 1500 MPa.

2. Véhicule selon la revendication 1, dans lequel le corps (11) et l'élément de surface (12) sont reliés l'un à l'autre.

3. Véhicule selon l'une quelconque des revendications 1 et 2, dans lequel la mousse de polyuréthane rigide a une densité comprise entre 40 et 200 kg/m³.

4. Véhicule selon l'une quelconque des revendications 1 à 3, dans lequel l'élément de surface (12) est un élément de plaque agencé de sorte à recouvrir pratiquement l'ensemble de l'aire de la surface de réception de l'impact du corps (11).

5. Véhicule selon l'une quelconque des revendications 1 à 4, dans lequel l'épaisseur de l'élément de surface (12) est comprise entre 0,5 et 5 mm.

6. Véhicule selon l'une quelconque des revendications 1 à 5, dans lequel l'épaisseur du corps (11) est comprise entre 10 et 80 mm.

7. Véhicule selon l'une quelconque des revendications 1 à 6, dans lequel l'élément à absorption de l'impact (10) est utilisé comme élément de protection de la tête pour un véhicule et est installé sur une carrosserie de véhicule ou sur une garniture intérieure, par exemple une garniture de toit ou un habillage.

8. Véhicule selon l'une quelconque des revendications 1 à 7, dans lequel pratiquement l'ensemble de l'aire de la surface du corps (11) est recouvert par une pièce de l'élément de surface (12).

9. Véhicule selon l'une quelconque des revendications 1 à 7, dans lequel pratiquement l'ensemble de l'aire de la surface du corps (11) est recouvert par plusieurs petits éléments de surface (12).
